# EUROPEAN PATENT APPLICATION

(11) **EP 4 287 090 A1**
(43) Date of publication of application: **06.12.2023**
(21) Application number: 22176465.7
(22) Date of filing: 31.05.2022
(51) Int. Cl.: G06Q 10/10, G06F 16/68

(54) **SYSTEM AND METHOD FOR CONTENT-BASED MUSIC CREATOR RECOMMENDATION**

(71) Applicant: Sparwk AS, 7010 Trondheim (NO)
(72) Inventor: Suk Choi, Jin, 10390 Goyang, Gyeonggi (KR); Jenssen, Robin, 111 37 Stockholm (SE); Liang, Beici, 7014 Trondheim (NO)
(74) Representative: Onsagers AS

(57) **Abstract**

A method and system for providing content-based recommendation of music creators selected from registered music creators, to be included in a music project with collaboration requests, where the registered music creators comprise creator profiles that are stored and made available in a creator retrieval module 205, and featured musical works including metadata, text-based tags of musical attributes and corresponding music contents that are stored and made available in a musical work retrieval module 230. The method is executed in a music creator recommendation system 110 running on a computing device 100 where input data characterising requested musical works made of creators are received via an interface module 200 on the computing device 100. Tag feature vectors of tags characterising musical attributes and content feature vectors of featured and requested musical works are generated. A list of work candidates is derived by comparing distances between the generated vectors and are sorted according to degree of similarity between feature vectors. The result is presented on a user interface 120.

## Description

### TECHNICAL FIELD

The present disclosure relates to a system and method for processing of music related content by neural networks, and more specifically to recommending music creators matching a music project with requests of music creators for collaboration.

### BACKGROUND

A music project is commonly initiated with specific requests to collaboratively deliver a musical work with several music creators. These music creators can have different roles for the music project, such as music producers, composers, lyricists, musicians, engineers and so on. From the perspective of a music creator, being able to use music project requests hosted by the music creator to reach other specific music creators having a relevant match for the music project request could prove immensely valuable.

There are tools and platforms to help multiple music creators work on the same music project in real time, such as Soundtrap (https://www.soundtrap.com) and LANDR (https://www.landr.com). However, there is a fundamental problem with existing tools, which is how to connect the right music creators of different roles together from the beginning of a music project. Relying on an existing network of a music industry professional may provide only limited insights into whether a music creator can become a matched collaborator of a music project. Moreover, such manual processes can be time consuming, and error prone due to the subjectivity of personal aesthetics. A more objective system is needed to optimize the process of music creator recommendation based on the requests of a music project.

By recommending the most relevant creators among a large collection of creators, collaborations can be more efficiently established. Music projects can then be more effectively completed to deliver the final musical works.

Existing recommendation systems employed by music services are commonly designed for music consumption purposes rather than, for instance, personalised advertising. Streaming services' recommendation systems can approximate user preferences through a machine learning paradigm based on big data derived from signal data such as a user's previous listening patterns, manual searches and the listening patterns of other users. In other words, streaming services use machine learning to recommend personalised playlists, as described in for instance

US 11086936 B2 and recommended artists as described in US 11210355 B2 by continually learning about a user's preferences from their streaming history, which is gathered and used continuously by the system. This approach is known as collaborative filters.

Systems based on collaborative filters do however suffer from the "cold start" problem, i.e. a new item cannot be recommended until it has been assessed and consumed, and it is less likely to be consumed if it is never recommended. Thus, these systems could reflect biases that may subsequently reduce new music discovery, homogenise taste and disempower emerging creators.

Content based recommendation systems have been developed to address the cold-start problem. This is described in Van den Oord, Aaron, et al. "Deep content-based music recommendation", Advances in neural information processing systems 26 (2013) and Liang, Beici, et al. "Learning audio embeddings with user listening data for content-based music recommendation", International Conference on Acoustics, Speech and Signal Processing (ICASSP). IEEE, 2021. Such recommendation systems operate on music feature vectors that are extracted automatically from the music content. While this approach naturally extends to any item regardless of popularity, the construction of feature vectors in these systems are not designed and optimised for connecting music creators to collaborate on music projects. Platforms that host professional information of music creators, for instance, LANDR [https://network.landr.com/browse/pros], allow users to connect with creators, but do not provide automated and optimized creator recommendation based on the requests of music projects.

There has yet to be a technical solution for quantifying the matching degree between music creators of different roles and music projects to optimize the recommendation process.

The example embodiments described herein provides a solution addressing the foregoing problems by providing a content-based method and system for music creator recommendation by computing distances for a plurality of music creators. Each distance quantifies the matching degree of a music creator to one of a plurality of music projects hosting one or more requests of music creators for collaboration.

### SHORT DESCRIPTION

The invention is defined by a method providing content-based recommendation of music creators, selected from registered music creators, to be included in a music project with collaboration requests, where the registered music creators comprise creator profiles that are stored and made available in a creator retrieval module, and featured musical works including metadata, text-based tags of musical attributes and corresponding music contents that are stored and made available in a musical work retrieval module, the method is executed in a music creator recommendation system running on a computing device. The method comprises:
- receiving, via a user interface module, input data comprising creator requirements, text-based tags of musical attributes and reference music content characterising requested musical works to be delivered in the music project;
- deriving, in a creator retrieval module, a list of creator candidates according to the creator requirements;
- deriving, in a musical work retrieval module, the corresponding featured musical works created by the creators included in the creator candidates;
- generating, in a tag neural network module, tag feature vectors of the tags of musical attributes of the featured musical works created by the creators included in the creator candidates and of the requested musical works;
- generating, in a content neural network module, content feature vectors of the music contents of the featured musical works created by the creators included in the creator candidates and of the requested musical works;
- comparing, in a work candidate generation module, the generated tag feature vectors of the requested musical works to the generated tag feature vectors of the featured musical works created by the creators included in the creator candidates;
- deriving a list of work candidates by sorting the compared tag feature vectors according to degree of similarity between tag feature vectors of the requested musical works and of the featured musical works;
- comparing, in a distance module, the content feature vectors of the requested musical works to the content feature vectors of the musical works in the list of work candidates;
- deriving a list of sorted work candidates according to determined distances, over the content vector space, of the content feature vectors of the musical works in the list of work candidates;
- deriving, in the creator retrieval module, the corresponding music creators of the musical works in the list of the sorted work candidates to form a recommendation list, and
- presenting, on the user interface, a final recommendation list of music creators to be included in the music project.

The above listed steps are not necessarily performed in the order listed. Content feature vectors may for instance be generated prior to the tag feature vectors, or they can be generated at the same time, i.e. by parallel processing.

In one embodiment of the invention, the user interface module is implemented to generate and display a user interface on the computing device. The user interface module may comprise a touch screen displaying different text-based tags of musical attributes that can be activated to input corresponding input data to the computing device. Input data can also be provided by other known means such as via a point- and-click device, keyboard, or speech.

In one embodiment, the text-based tags of musical attributes are user-generated, e.g. input via a touch screen. In another embodiment, the tags are computer generated by executing an algorithm analysing musical work.

According to one embodiment, the tag neural network module is adapted to concatenate multiple text feature vectors, each defining different characterising aspects of musical attributes, to a single tag feature vector representing all characteristics.

According to one embodiment, the content neural network module is adapted to concatenate multiple audio feature vectors, each defining different characterising aspects of the audio, to a single audio feature vector representing all characteristics.

According to one embodiment, the content neural network module is adapted to generate a single lyrics feature vector representing semantic meanings of a lyrics document.

According to one embodiment, a selection of information characterising the final recommendation list of music creators to display on the computing device is determined.

The present invention is further defined by a music creator recommendation system providing content-based recommendation of music creators, selected from registered music creators, to be included in a music project with collaboration requests, where the registered music creators comprise creator profiles that are stored and made available in a creator retrieval module, and featured musical works including metadata, text-based tags of musical attributes and corresponding music contents that are stored and made available in a musical work retrieval module.

The system comprises a computing device adapted for performing the content-based recommendation when executing a music creator recommendation program. The system further comprises:
- a user interface module receiving input data comprising creator requirements, text-based tags of musical attributes and reference music content characterising requested musical works to be delivered in the music project;
- a tag neural network module generating tag feature vectors of the musical attributes of the musical works included in the featured musical works and the requested musical works;
- a content neural network module generating content feature vectors of the music contents of the musical works included in the featured musical works and the requested musical works;
- a creator retrieval module deriving a list of creator candidates according to the creator requirements;
- a musical work retrieval module deriving the corresponding featured musical works created by the creators included in the creator candidates;
- a work candidate generation module comparing the generated tag feature vectors of the requested musical works to the generated tag feature vectors of the featured musical works created by the creators included in the creator candidates, and deriving a list of work candidates by sorting the compared tag features vectors according to degree of similarity between tag feature vectors of the requested musical works and of the featured musical works created by the creators included in the creator candidates;
- a distance module comparing the content feature vectors of the requested musical works with the content feature vectors of the musical works included in the list of work candidates, and deriving a list of sorted work candidates according to determined distances, over the content vector space, of the content feature vectors of the musical works included in the list of work candidates;
- said creator retrieval module is further adapted to derive the corresponding music creators of the musical works included in the list of the sorted work candidates to form a recommendation list, and
- a user interface, presenting a final recommendation list of music creators to be included in the musical project.

### DETAILED DESCRIPTION

The present invention will now be described by examples and with reference to the accompanying figures illustrating an embodiment of the invention. These figures are provided to facilitate the understanding of the disclosed technology and shall not be considered limiting of the breadth, scope, or applicability thereof.
Figures 1a - 1b illustrate a digital medium environment in an example implementation that is operable to employ techniques described herein.
Figure 2 illustrates an example system for recommending a music creator from registered creators to match the request proposed in a music project in accordance with one or more aspects of the disclosure.
Figure 3 is a flow diagram depicting an example procedure in accordance with the music creator recommendation of composers.
Figure 4 is a flow diagram depicting an example procedure in accordance with the music creator recommendation of lyricists.

The following terms are used throughout the disclosure. The descriptions of these terms are by way of example, and not limitation.

Music project - describes a collection of requests proposed by the project creators, such as music publishers, record labels, and the like, who look for music creators of different roles that match the requests for collaboration. A music project can include creator requests, musical attributes of the proposed musical work to be collaborated on, and reference music content.

Music creator - is a catch-all term referring to composers, lyricists, performers, producers, and other roles involved in the music creation process.

Musical work - describes the underlying music composition and production, comprising melody, lyrics, and other music content created by music creators. During the registration of a musical work, corresponding metadata, musical attributes, audio recordings, and other music related information are stored.

Reference music content - describes one or more music related contents provided by a project creator. The contents, such as audio files, lyrics documents, and the like, can be loaded into a music creator recommendation system in order to search for creators whose featured musical works are perceptually similar to the reference music content.

Metadata - for music is a collection of information that pertains to a music entity. Metadata can include descriptive information, which details the contents of a track, such as the title, album, track number, and so on. Metadata can also include ownership information, which details the creators, their corporate partners, the contractual terms agreed by them, and so on.

Musical attribute - describes any suitable characteristic of music that can be used to classify a music entity such as a music project, a musical work, and a music file. Examples of musical attribute include genre, such as rock, jazz, etc., mood, e.g., happy, sad, etc., tonality, e.g., key, scale, etc., rhythm, e.g., tempos in beat per minute, or levels of perceived tempos such as slow, medium, fast, etc., vocal, e.g., female, male, etc., instrument, e.g., piano, guitar, etc., and the like.

Tag feature vector - describes a vector generated from text-based tags of musical attributes to represent semantic meanings of text information. A tag feature vector can be generated with a word-based neural network that processes tags of an aspect of musical attributes, such as tags related to genres, and generates the tag feature vector in a vector space.

Lyrics feature vector - describes a vector generated from text-based lyrics of musical works to represent semantic meanings of text information. A lyric s feature vector can be generated with a document-based neural network that processes the lyrics of a musical work, and generates the lyrics feature vector in a vector space.

Audio feature vector - describes a vector generated from a music file that represents low-level characteristics of music content. An audio feature vector can be generated with an audio-based neural network that processes a time sequence of a music file, such as a waveform, or a two-dimensional representation of the music file, such as a spectrogram, and generates the audio feature vector in a vector space.

Vector space - describes a space in which vectors of real-valued numbers, such as audio feature vectors of audio files, belong. A vector of a vector space can be added to another vector in the vector space, and the result belongs to the vector space. A vector of a vector space can also be multiplied by a real-valued scalar, and the result belongs to the vector space. The vector space can include any suitable number of dimensions.

Distance - describes a norm of a difference between feature vectors. It indicates a matching degree between music projects and music creators represented by the feature vectors.

Distance similarity threshold - describes a threshold that can be used to determine if a music creator matches the requests of a music project.

The present invention describes systems, devices, and techniques for recommending music creators of different roles according to the requests provided in a music project. As discussed above, existing collaborations between music creators rely on their own networks which are limited to some extent. Platforms that provide music recommendation services are not adapted to connect music creators for collaborations on music projects. The embodiments described herein provides a process of recommending a music creator to a project based on objective measurements of how the music creator matches the project requests.

The following non-limiting example is provided to introduce a certain embodiment of the invention. In this example, a music creator recommendation system can access a music project with specific collaboration requests, and music creators of different roles to be recommended. The music creator recommendation system provides a user interface to the music industry professionals for creating a project by presenting collaboration requests on music creators such as role, location, language, etc., and further musical attributes that should be obtained by the musical works to be collaborated on, e.g. genre, instrument, etc., and by providing music contents as references, e.g., music recordings, lyrics, etc.

The music creator recommendation system can also provide a user interface to the music creators for their profile registration, which can present their personal information such as role, location, language, years of experience, availability, accolades, etc., upload music contents of their featured musical works, e.g., music recording, lyrics, etc., and according to the featured musical works, store metadata, tags of musical attributes and other related information. The tags of musical attributes can be user-generated, i.e. specified by a music creator, or algorithmically generated, such as tags that are generated by a content analysis algorithm, such as a tempo estimation algorithm, a genre classifier, and the like.

The music creator recommendation system in this example uses three stages of candidate generation to decide the final list of music creators to be recommended to a given music project.

In the first stage, creator requests proposed in the music project are used to generate creator candidates for recommendation from a large collection of music creators. Creator candidates consist of music creators who obtain personal information that match the creator requests on roles, locations, languages, years of experience, availability, accolade, and the like. Corresponding musical attributes and music contents of the featured musical works that belong to the creator candidates are obtained for the following two stages of candidate generation.

In the second stage, musical attributes proposed in the music project are used to generate work candidates from the featured musical works obtained in the first stage. Work candidates consist of musical works that obtain similar musical attributes to the ones requested in the music project. To quantify the similarity between musical attributes of musical works and the music project, trained word-based neural networks are used to represent tags of musical attributes into tag feature vectors. The music creator recommendation system provides tags of musical attributes requested by the music project to the word-based neural networks to obtain the tag feature vectors, which are compared to the tag feature vectors corresponding to the tags of musical attributes of musical works that have been stored in the database. The music creator recommendation system can determine the distance between the tag feature vectors of musical attributes, and return the work candidates consisting of the musical works that correspond to the smallest distances, such as the top-ten musical works having the ten smallest distances.

Additionally, or alternatively, the music creator recommendation system can return the work candidates consisting of the musical works corresponding to respective distances that are less than a distance similarity threshold. The threshold is a floating-point number which ranges from zero to one. The threshold value can be pre-set by the music creator recommendation system, and/or adjusted via the user interface. Distance between tag feature vectors of different musical works is determined by estimating the difference in numerical representations of similar musical attributes of the tag feature vectors.

In the example described herein, the word-based neural networks were trained with a large corpus of text especially in the musical context to learn word associations. Tags of musical attributes can be represented as respective tag feature vectors. Distances between the tag feature vectors indicate the semantic similarity between the tags represented by these vectors. Therefore, tag feature vectors can handle plural forms, such as guitar and guitars, synonyms such as happy and cheerful, acronyms such as edm and electronic dance music, dialectal forms such as brazil and brasil, and the like in tags of musical attributes.

From the work candidates, the music creator recommendation system determines the final list of music creators using trained music content based neural networks in the third stage. In one example, where the reference music contents provided in the music project are audio recordings, audio-based neural networks are used. The music creator recommendation system provides audio recordings of the reference music contents specified in the music project to the audio-based neural networks to obtain the audio feature vectors, which are compared to the audio feature vectors corresponding to audio recordings of the musical works in the work candidates. The music creator recommendation system can determine the distance between the audio feature vectors of audio recordings to return sorted work candidates. Then the corresponding music creators of the sorted work candidates can be obtained. According to the number of music creators to be recommended to a project, for instance five, the top-five music creators whose musical works have the five smallest distance in the sorted work candidates form the final recommendation list of music creators for the project.

In the above example, the audio-based neural networks were trained to analyse the subjective information such as genre, mood, etc., objective information such as vocal, instrument, etc.), and harmonic progression from audio recordings of musical works, and represent these aspects of audio contents as respective audio feature vectors. Distances between the audio feature vectors indicate the perceptually similarity between the music represented by these vectors. The audio feature vectors provide a music representation of higher specificity than the tag feature vectors and are therefore used to narrow down the musical works and the corresponding music creators to be recommended from the candidates which are generated from the previous stages.

In one example, where the reference music contents provided in the music project are lyrics documents, trained document-based neural networks are used to determine the final list of music creators in the third stage. The document-based neural networks were trained with a large corpus of lyrics documents to learn document associations. Documents of lyrics can be represented as respective lyrics feature vectors. Distances between the lyrics feature vectors indicate the semantic similarity between the documents represented by these vectors. The music creator recommendation system provides lyrics documents of the reference music contents specified in the music project to the document-based neural networks to obtain the lyrics feature vectors, which are compared to the lyrics feature vectors corresponding to lyrics documents of the musical works in the work candidates. The music creator recommendation system can determine the distance between the lyrics feature vectors of musical works to return sorted work candidates. Then the corresponding music creators of the sorted work candidates can be obtained. According to the number of music creators to be recommended to a project, for instance five, the top-five music creators whose musical works have the five smallest distance in the sorted work candidates form the final recommendation list of music creators for the project.

In the following discussion, an example digital medium environment is described that may employ the techniques described herein. Example implementation details and procedures are then described which may be performed in the example digital medium environment as well as in hardware environments, firmware, software, or a combination thereof.

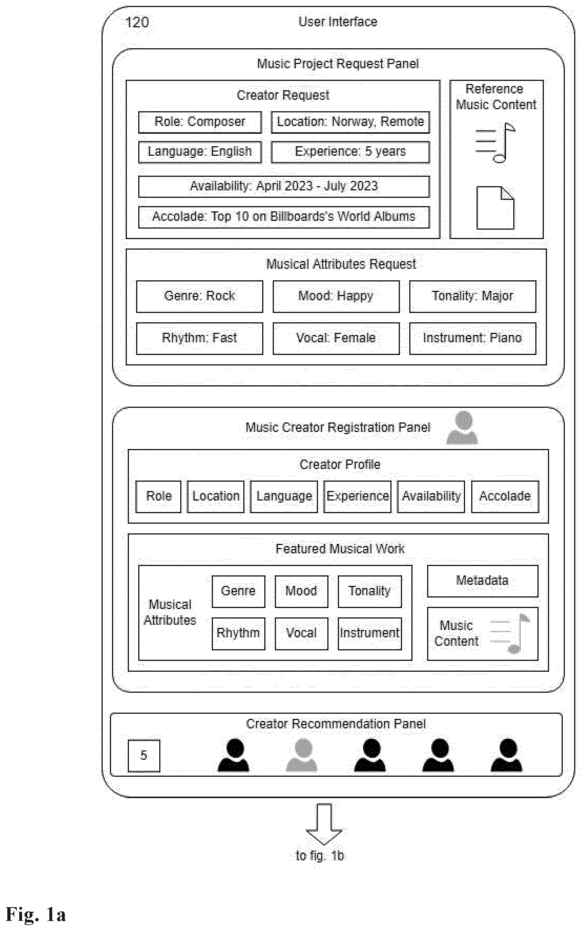

Figures 1a - 1b illustrate an example implementation of a digital medium environment in that is operable to employ techniques described herein. As used herein, the term "digital medium environment" refers to the various computing devices and resources that can be utilised to implement the techniques described herein. The illustrated digital medium environment includes a computing device 100 depicted as a desktop computer, which is an example computing device 100. The computing device 100 can generally include any suitable type of computing device with memory and processor resources. The computing device 100 comprises a music creator recommendation system 110. The music creator recommendation system 110 can generate a user interface 120 that is displayable on a display device of the computing device 100.

The user interface 120 includes a music project request panel for configuring requests that should be matched by the music creators recommended to the project. The music project request panel includes a creator request panel for configuring the basic requirements for collaboration. The creator request panel can display the configurations. In the example in Figures 1a - 1b, a project creator has configured six requirements that should be fulfilled by the music creators to collaborate on this project, including role as composer, location as Norway or remote, language as English, experience as 5 years, availability from April to July 2023, and accolade as top 100 on billboard's world albums. The music project request panel also includes a musical attribute request panel for configuring different aspects of musical attributes to be obtained by the musical works delivered from this project. The musical attributes request panel can display the configurations. In the example in Figures 1a - 1b, a project creator has configured six aspects of musical attributes in the musical attributes request panel, including genre as rock, mood as happy, tonality as major, rhythm as fast, vocal as female, and instrument as bass. The music project request panel also includes a reference music content panel, which can load one or more examples of music related contents into the music creator recommendation system 110 as references. The user interface 120 can display any suitable representation of the reference music content, such as a waveform of an audio file, text of lyrics document, etc.

The user interface 120 also includes a music creator registration panel for registering a new profile of music creator that will be recommended to matched projects for collaboration. The music creator registration panel includes a profile panel for logging and displaying personal information about the music creator, such as role, location, language, experience, availability, accolade, and the like. The music creator registration panel also includes a featured musical work panel for registering one or more musical works created by the music creator. The featured musical work panel includes a metadata panel for logging and displaying general ownership metadata and descriptive metadata of the featured musical work, and a music content panel for uploading and displaying the corresponding music content of the featured musical work. The featured musical work panel also includes a musical attributes panel for describing different aspects of musical attributes of the featured musical work. The musical attributes panel can display tags of musical attributes that are user-generated, or algorithmically generated by content analysis algorithms. In the example in Figures 1a - 1b, a featured musical work has been registered with the metadata, one audio file as the music content, and six aspects of musical attributes, including genre, mood, tonality, rhythm, vocal and instrument.

Based on the music project requests, the user interface 120 can display a creator recommendation panel for displaying music creators that match the requests. In the example in Figures 1a - 1b, since a user has instructed the music creator recommendation system 110 to return a list of five creators, the creator recommendation panel displays representations of five music creators, including the newly registered music creator as the second one. A user can select any of these music creators, view the creator's profile, and play the audio file of the creator's featured musical work through a loudspeaker of the computing device 100.

The music creator recommendation system 110 includes a display, which can expose any suitable data used by or associated with the music creator recommendation system 110. For example, the display can display the user interface 120 mentioned above. The music creator recommendation system 110 also includes processors, which can include any suitable type of processor. The music creator recommendation system 110 can be implemented by executing the instructions stored in storage on the processors. The storage can be any suitable type of storage accessible by or included in the music creator recommendation system 110. The music creator recommendation system 110 also includes transceivers, which can be implemented to transmit and receive data using any suitable type and number of communication protocols.

The music creator recommendation system 110 also includes the music creator recommendation application that represents functionality configured to recommend music creators to music projects based on the project requests. The music creator recommendation application can be implemented as any type of module or component in any type of computing device. The music creator recommendation application can include or have access to any suitable data for music creator recommendation, including music project data, music creator data, recommendation data, user interface data, neural network data (e.g., architecture definitions of a neural network, activation functions, and the like), and feature vector data (e.g., tag feature vector of a musical attribute, lyrics feature vector of a lyrics document, audio feature vector of the harmonic progression in a music file, and the like).

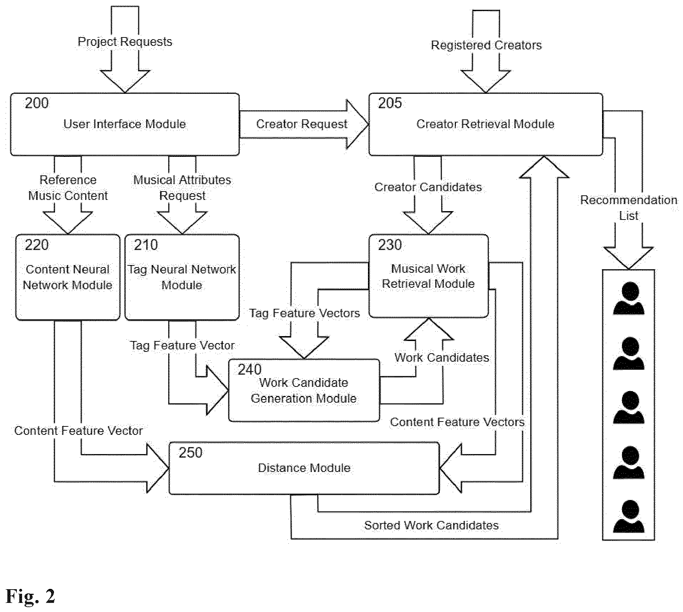

Figure 2 illustrates an example of a music creator recommendation system 110 for obtaining a list of music creators from registered creators for a given music project request in accordance with one or more aspects of the disclosure. In this implementation, the system includes user interface module 200, creator retrieval module 205, tag neural network module 210, content neural network module 220, musical work retrieval module 230, work candidate generation module 240, and distance module 250. These modules can be implemented as any type of module or component in any type of computing device. The system here is one example of the music creator recommendation system 110 in Figures 1a - 1b that can be constructed using these modules.

The user interface module 200 can be implemented to generate and display a user interface 120. The user interface 120 in Figures 1a - 1b is an example of a user interface 120 generated by the user interface module 200. The user interface module 200 can receive and display project requests via the user interface 120, including a user selection of creator requests for which the user would like the creators in the recommendation list to obtain, a user selection of musical attributes for which the user would like the musical works delivered by the project to obtain, and a user selection of reference music contents for which the user would like the final delivered musical works to be perceptually similar to.

The creator retrieval module 205 can be implemented to generate a list of creator candidates from a collection of music creators that have been registered in the music creator recommendation system 110. This list is formed according to the user selection of creator requests from the user interface module 200. Therefore, the generated creator candidates consist of music creators who obtain personal information that match the creator requests on roles, locations, languages, and the like. The creator retrieval module 205 can provide the generated creator candidates to the musical work retrieval module 230.

The tag neural network module 210 can be implemented to generate a tag feature vector for the text-based tags of musical attributes. The tag neural network module 210 can include a trained word-based neural network to generate feature vectors. In one example, the tag neural network module 210 generates a tag feature vector by concatenating multiple feature vectors of different aspects of musical attributes. For example, six feature vectors can be respectively obtained from the trained word-based neural network for six aspects of musical attributes including genre, mood, tonality, rhythm, vocal, and instrument. They are then concatenated into one vector as the tag feature vector. The tag neural network module can provide the tag feature vector corresponding to the music project requests on musical attributes to the work candidate generation module 240.

The content neural network module 220 can be implemented to generate a content feature vector for music related content, such as audio files and lyrics documents. The content neural network module 220 can include trained audio-based neural networks to generate audio feature vectors, and/or trained document-based neural networks to generate lyrics feature vectors. In one example, the content neural network module 220 generates an audio feature vector of one audio file by concatenating multiple feature vectors of different aspects of music. For example, three feature vectors can be respectively obtained from three trained audio-based neural networks for objective information, subjective information, and harmonic progression. They are then concatenated into one vector as the audio feature vector. In another example, the content neural network module 220 generates a single lyrics feature vector representing semantic meaning of a lyrics document. The content neural network module 220 can provide the audio feature vector and/or the lyrics feature vector corresponding to the reference music content given in the music project requests to the distance module 250.

In an example, the project requests can include multiple reference music contents. In this case, the content neural network module 220 can generate respective feature vectors for the multiple reference music contents and determine a single feature vector for the project from an average of the respective feature vectors for the multiple reference music contents. The content neural network module 220 can then provide the single feature vector to the distance module 250.

According to the creator candidates provided by the creator retrieval module 205, the musical work retrieval module 230 can retrieve their corresponding featured musical works to obtain the respective tag feature vectors and content feature vectors from the database, which represent the semantic meanings of tags of musical attributes and music content, respectively. Additionally or alternatively, the musical work retrieval module 230 can obtain these feature vectors by providing the corresponding tags of musical attributes to the tag neural networks module 210, and the corresponding music content to the content neural network module 220, which can then generate tag and content feature vectors for the featured musical works belong to the creator candidates. The musical work retrieval module 230 can provide the tag feature vectors to the work candidate generation module 240, and the content feature vectors to the distance module 250.

The work candidate generation module 240 can be implemented to determine distances between tag feature vectors, such as distances between the tag feature vector for the project requests and tag feature vectors for the featured musical works of the creator candidates. Hence the work candidate generation module 240 can receive the tag feature vector for the project requests on musical attributes from the tag neural network module 210, and the tag feature vectors from the musical work retrieval module 230. The work candidate generation module 240 can determine the distances over the tag vector space and indicate a list of work candidates, consisting of the featured musical works that obtain similar musical attributes to the project requests. Here the distances can be determined in any suitable way, such as by, ranking the distances, comparing the distances to a threshold, etc.

The musical work retrieval module 230 can receive the work candidates from the work candidate generation module 240 and provide the content feature vectors of the musical works in the work candidates to the distance module 250.

The distance module 250 can be implemented to determine distances between content feature vectors, such as distances between the audio feature vector for the project requests and audio feature vectors for the musical works in the work candidates, and/or distances between the lyrics feature vector for the project requests and lyrics feature vectors for the musical works in the work candidates. Hence, the distance module 250 can receive the content feature vector for the reference music content from the content neural network module 220, and the content feature vectors from the musical work retrieval module 230. The distance module can determine the distances over the content vector space and select musical works with the smallest distances to form the sorted work candidates. According to the sorted work candidates, the creator retrieval module can obtain the corresponding music creators to form the final recommendation list. In the example illustrated in Figure 2, the distance module can determine the musical works from the work candidates that are closest to the reference music content based on the top-five distances with the smallest values, and then the creator retrieval module returns the corresponding five music creators of these musical works to form the recommendation list.

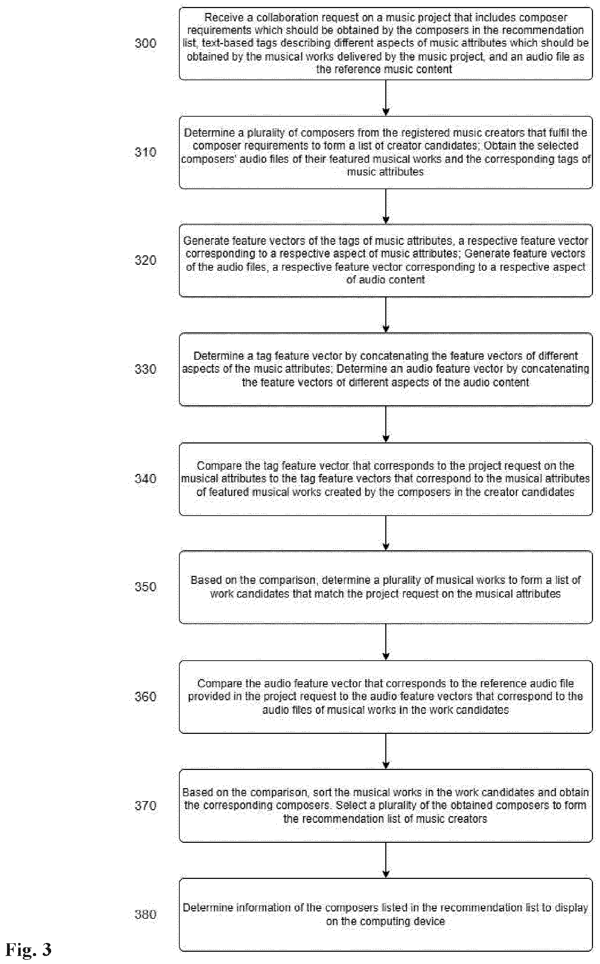

Figure 3 illustrates a flow diagram depicting an example procedure in accordance with the music creator recommendation of composers. The first step 300 of the procedure is receiving a collaboration request on a music project. The request includes composer requirements which should be obtained by the composers in the recommendation list, text-based tags describing different aspects of music attributes which should be obtained by the musical works delivered by the music project, and an audio file as the reference music content. The next step 310 is to determine a plurality of composers from the registered music creators that fulfil the composer requirements to form a list of creator candidates. The selected composers' audio files of their featured musical works and the corresponding tags of music attributes are obtained for the comparison of their feature vectors in the following steps. The next step 320 is to generate tag feature vectors of the tags of music attributes according to the method described above, where a respective feature vector corresponds to a respective aspect of music attributes. Likewise, audio feature vectors of the audio files are generated, where a respective feature vector corresponds to a respective aspect of music content. In one embodiment, illustrated in step 330, the multiple tag feature vectors and audio feature vectors are concatenated to a single tag feature vector and a single audio feature vector representing all respective characteristics.

The next step 340 is to compare a tag feature vector corresponding to a project request on the musical attributes to the tag feature vectors that correspond to the musical attributes of featured musical works created by the composers in the creator candidates. Based on the comparison, the next step 350 is to determine a plurality of musical works to form a list of work candidates, i.e. musical works that match the project request in view of the musical attributes. The next step 360 is to compare an audio feature vector that corresponds to the reference audio file provided in the project request to the audio feature vectors that correspond to the audio files of musical works in the work candidates. Based on the comparison, musical works in the work candidates are sorted and the corresponding composers are obtained in step 370. A final recommendation list is determined consisting of a plurality of composers selected from the obtained sorted composers. In the last step 380, information related to the composers listed in the recommendation list to display on the computing device is determined.

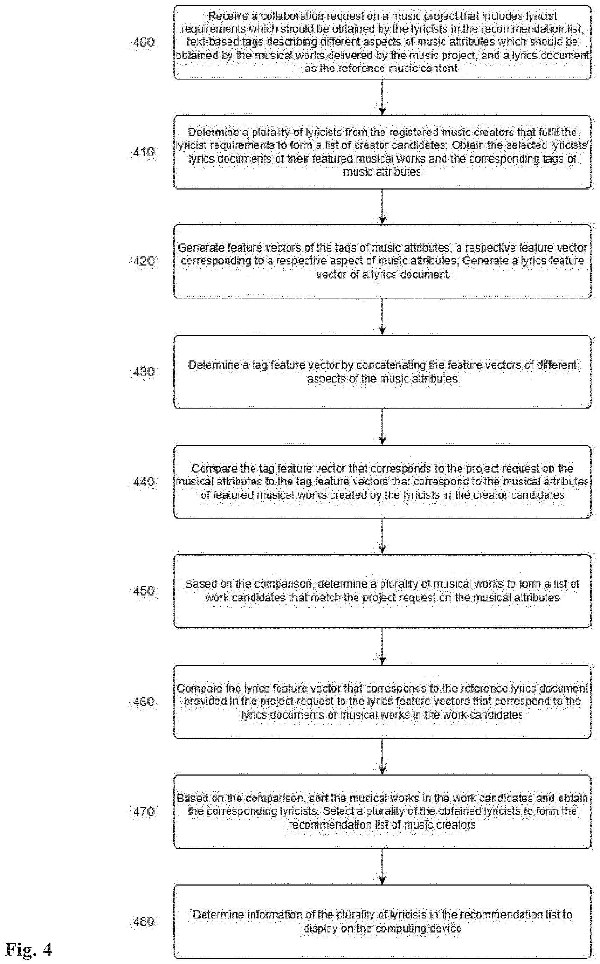

Figure 4 illustrates a flow diagram depicting an example procedure in accordance with the music creator recommendation of lyricists. The first step 400 of the procedure is receiving a collaboration request on a music project. The request includes lyricist requirements which should be obtained by the lyricists in the recommendation list, text-based tags describing different aspects of music attributes which should be obtained by the musical works delivered by the music project, and a lyrics document as the reference music content. The next step 410 is to determine a plurality of lyricists from the registered music creators that fulfil the lyricist requirements to form a list of creator candidates. The selected lyricists' lyrics documents of their featured musical works and the corresponding tags of music attributes are obtained for the comparison of their feature vectors in the following steps. The next step 420 is to generate tag feature vectors of the tags of music attributes according to the method described above, where a respective feature vector corresponds to a respective aspect of music attributes. Likewise, lyrics feature vectors of the lyrics documents are generated respectively. In one embodiment described in step 430, the multiple tag feature vectors are concatenated to a single tag feature vector representing all characteristics.

The next step 440 is to compare a tag feature vector corresponding to a project request on the musical attributes to the tag feature vectors that correspond to the musical attributes of featured musical works created by the lyricists in the creator candidates. Based on the comparison, the next step 450 is to determine a plurality of musical works to form a list of work candidates, i.e. musical works that match the project request in view of the musical attributes. The next step 460 is to compare a lyrics feature vector that corresponds to the reference lyrics document provided in the project request to the lyrics feature vectors that correspond to the lyrics documents of musical works in the work candidates. Based on the comparison, the next step 470 is to sort musical works in the work candidates and obtaining the corresponding lyricists. A final recommendation list is determined comprising a plurality of lyricists selected from the obtained sorted lyricists. In the last step 480, information related to the lyricists listed in the recommendation list to display on the computing device 100 is determined.

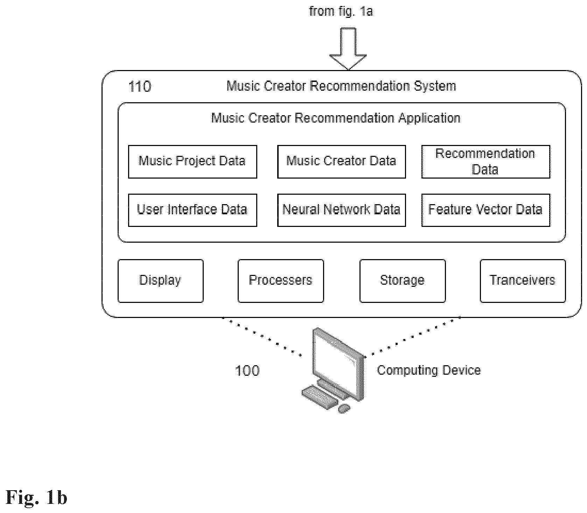

Aspects of the procedures illustrated in Figure 3 and 4 may be implemented in hardware, firmware, software, or a combination thereof. The procedure is illustrated as a set of blocks that specify operations performed by one or more devices and are not necessarily limited to the orders shown for performing the operations by the respective blocks. The procedure may be performed in a digital medium environment by a suitably configured computing device, such as the computing device 100 described with reference to Figure 1 that makes use of a music creator recommendation system 110, such as the system described with reference to Figure 2.

A music creator recommendation system implementing procedures illustrated in Figure 3 and 4 may be an independent application that has been installed on the computing device 100, a service hosted by a service provider that is accessible by the computing device 100, a plug-in module to the computing device 100, or combinations thereof.

## Claims

1. A method for providing content-based recommendation of music creators, selected from registered music creators, to be included in a music project with collaboration requests, where the registered music creators comprise creator profiles that are stored and made available in a creator retrieval module (205), and featured musical works including metadata, text-based tags of musical attributes and corresponding music contents that are stored and made available in a musical work retrieval module (230), the method is executed in a music creator recommendation system (110) running on a computing device (100), the method comprises:
- receiving, via a user interface module (200), input data comprising creator requirements, text-based tags of musical attributes and reference music content characterising requested musical works to be delivered in the music project;
- deriving, in a creator retrieval module (205), a list of creator candidates according to the creator requirements;
- deriving, in a musical work retrieval module (230), the corresponding featured musical works created by the creators included in the creator candidates;
- generating, in a tag neural network module (210), tag feature vectors of the tags of musical attributes of the featured musical works created by the creators included in the creator candidates and of the requested musical works;
- generating, in a content neural network module (220), content feature vectors of the music contents of the featured musical works created by the creators included in the creator candidates and of the requested musical works;
- comparing, in a work candidate generation module (240), the generated tag feature vectors of the requested musical works to the generated tag feature vectors of the featured musical works created by the creators included in the creator candidates;
- deriving a list of work candidates by sorting the compared tag feature vectors according to degree of similarity between tag feature vectors of the requested musical works and of the featured musical works;
- comparing, in a distance module (250), the content feature vectors of the requested musical works to the content feature vectors of the musical works in the list of work candidates;
- deriving a list of sorted work candidates according to determined distances, over the content vector space, of the content feature vectors of the musical works in the list of work candidates;
- deriving, in the creator retrieval module (205), the corresponding music creators of the musical works in the list of the sorted work candidates to form a recommendation list, and
- presenting, on the user interface (120), a final recommendation list of music creators to be included in the music project.

2. The method according to claim 1, where the user interface module (200) is implemented to generate and display a user interface (120) on the computing device (100).

3. The method according to claim 1 or 2, where the text-based tags of musical attributes are user-generated and/or computer generated by executing an algorithm.

4. The method according to any of the previous claims, where the tag neural network module (210) is adapted to concatenate multiple text feature vectors, each defining different characterising aspects of musical attributes, to a single tag feature vector representing all characteristics.

5. The method according to any of the previous claims, where the content neural network module (220) is adapted to concatenate multiple audio feature vectors, each defining different characterising aspects of the audio, to a single audio feature vector representing all characteristics.

6. The method according to any of the previous claims, where the content neural network module (220) is adapted to generate a single lyrics feature vector representing semantic meanings of a lyrics document.

7. The method according to any of the previous claims, by determining a selection of information characterising the final recommendation list of music creators to display on the computing device.

8. A music creator recommendation system providing content-based recommendation of music creators, selected from registered music creators, to be included in a music project with collaboration requests, where the registered music creators comprise creator profiles that are stored and made available in a creator retrieval module (205), and featured musical works including metadata, text-based tags of musical attributes and corresponding music contents that are stored and made available in a musical work retrieval module (230), the system comprises a computing device (100) adapted for performing the content-based recommendation when executing a music creator recommendation program, the system further comprises:
- a user interface module (200) receiving input data comprising creator requirements, text-based tags of musical attributes and reference music content characterising requested musical works to be delivered in the music project;
- a tag neural network module (210) generating tag feature vectors of the musical attributes of the musical works included in the featured musical works and the requested musical works;
- a content neural network module (220) generating content feature vectors of the music contents of the musical works included in the featured musical works and the requested musical works;
- a creator retrieval module (205) deriving a list of creator candidates according to the creator requirements;
- a musical work retrieval module (230) deriving the corresponding featured musical works created by the creators included in the creator candidates;
- a work candidate generation module (240) comparing the generated tag feature vectors of the requested musical works to the generated tag feature vectors of the featured musical works created by the creators included in the creator candidates, and deriving a list of work candidates by sorting the compared tag features vectors according to degree of similarity between tag feature vectors of the requested musical works and of the featured musical works created by the creators included in the creator candidates;
- a distance module (250) comparing the content feature vectors of the requested musical works with the content feature vectors of the musical works included in the list of work candidates, and deriving a list of sorted work candidates according to determined distances, over the content vector space, of the content feature vectors of the musical works included in the list of work candidates;
- said creator retrieval module (205) is further adapted to derive the corresponding music creators of the musical works included in the list of the sorted work candidates to form a recommendation list, and
- a user interface (120), presenting a final recommendation list of music creators to be included in the musical project.

9. A computer program product that when executed by a computing device (100) performs the method according to claims 1 to 7 for providing content-based recommendation of music creators, selected from registered music creators, to be included in a music project with collaboration requests, where registered music creators comprise creator profiles that are stored and made available in a creator retrieval module (205), and featured musical works including metadata, text-based tags of musical attributes and corresponding music contents that are stored and made available in a musical work retrieval module (230).
